# DEMANDE DE BREVET EUROPEEN

(11) **EP 1 926 293 A2**
(43) Date de publication de la demande: **28.05.2008**
(21) Numéro de dépôt: 07380237.3
(22) Date de dépôt: 30.05.2007
(51) Int. Cl.: H04M 1/15, H04B 1/38

(54) **Accessoire retractile pour téléphones portables**

(30) Priorité: 20.07.2006 ES 200601725 U
(71) Demandeur: Bonet, Rafael Honor, 11130 Chiclana de la Frontera Cadiz (ES)
(72) Inventeur: Bonet, Rafael Honor, 11130 Chiclana de la Frontera Cadiz (ES)

(57) **Abrégé**

L' odjet de l'invention est un appareil permettant d' attacher l' objet ou dispositif : Telephone portable , mp3 ,appareil de photo, video camera etc.......que l' on veut proteger des risques de vol ,chute , coup ou perte.

Le dit accessoire est muni d' un systéme métallique d' entrainement de cordon fixé sur l' un des côtés pour pouvoir l'attacher à des ceintures,des bananes (sacs qui se porte a la ceinture) des sacs,des mallettes,etc. Ce dispositif permait au proprietaire de rattacher a lui l' objet qu' il veut proteger, ce qui lui permait de l'avoir a la vue et sous la main.

## Description

### OBJET DE L'INVENTION

Comme décrit dans l'énoncé de ce mémoire, la présente invention a pour objet un système d'attache du portable conçu pour accrocher le téléphone, à la ceinture du pantalon, aux anses d'un sac, d'un porte-documents, d'une banane, etc...

Il s'agit d'un accessoire constitué d'une canette ou bobine renfermant un ressort métallique dont la fonction est de tendre la canette. Celle-ci contient à son tour un cordon enroulé.

Ce mécanisme s'installe à l'intérieur de deux carcasses qui se referment l'une sur l'autre, avec une ouverture à l'une de ses extrémités pour laisser passer le cordon qui s'accroche au portable. Lors de l'utilisation du portable, le cordon se déroule et la canette se tend, une fois sa fonction terminée le cordon s'enroule de nouveau produisant un effet rétractile d'où le nom de l'accessoire.

### ANTECEDENTS DE L'INVENTION

Je ne connais aucun accessoire à effet rétractile pour portable, néanmoins ce mécanisme est utilisé pour des mètres à ruban, des laisses pour animaux (chiens), etc. Cela étant, je ne connais rien qui s'adapte au portable.

### DESCRIPTION DE L'INVENTION

L'objet de l'invention est un appareil permettant d'attacher le téléphone portable afin d'éviter les risques de chute, de coup, de vol ou de perte.

Ledit accessoire est muni de l'habituel système métallique d'entraînement de cordon fixé sur l'un des côtés pour pouvoir l'attacher à des ceintures, des bananes, des sacs, des mallettes, etc.

Afin de compléter la description ci-jointe et en vue de faciliter la compréhension des caractéristiques de l'invention, le présent mémoire est assorti d'une série de schémas montrant les accessoires et les avantages de l'objet de l'invention.

### BREVE DESCRIPTION DES DESSINS

Figure 1- Montre une vue de face de la carcasse, pièce constituant le dispositif d'attache.
Figure 2- Montre une vue en perspective de la bobine ou canette.
Figure 3- Montre une vue de face de la partie postérieure de la carcasse.
Figure 4 - Montre une vue en perspective du système d'entraînement du cordon.
Figure 5 - Montre une vue de face du couvercle de la carcasse.
Figure 6 - Montre une vue de dessus du ressort métallique.
Figure 7 - Montre une vue de face de l'accessoire rétractile pour téléphone portable après montage.

### DESCRIPTION DU MODE DE MONTAGE PREFERE

Les figures commentées ci-dessous montrent que l'accessoire est composé de cinq pièces destinées à leur assemblage.

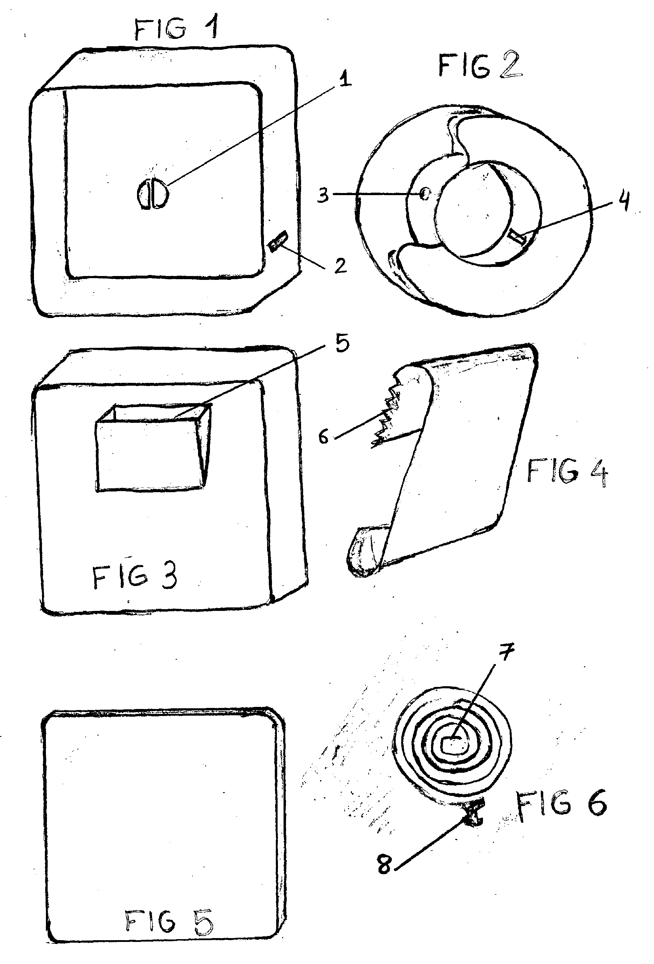

La figure n°1 représente une carcasse renfermant en son centre une saillie (1) dans laquelle vient s'insérer le ressort (7). Sur le côté de la carcasse, il y a une ouverture (2) à travers laquelle on aperçoit le cordon (9).

La figure n°2 montre la canette installée à l'intérieur de la carcasse (figure n°1), la saillie étant située au centre de la canette.

Au centre de la canette (figure n°2), le ressort métallique (figure n°6) est relié par une extrémité (8) à l'ouverture de la canette (4),

On peut également observer que la canette (figure n°2) comprend un orifice (3) dans lequel est fixé le cordon (9) qui s'enroule autour de la canette. L'autre extrémité du cordon sortira par l'ouverture pratiquée dans la carcasse (2).

Une fois assemblées les figures 1,2 et 6, la carcasse sera reformée par son couvercle (figure n°3).

La figure n°3 montre la partie postérieure de la carcasse contenant un boîtier (5) dans lequel s'insère le système métallique d'entraînement du cordon (figure n°4) au moyen de la partie dentée (6).

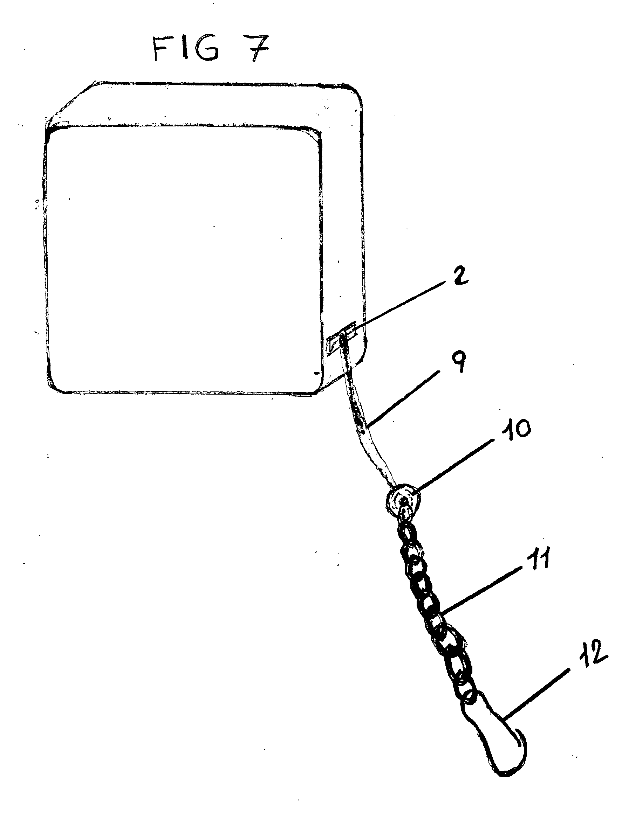

Dans la figure n°7, on voit comment d'une part le cordon (9) est relié à une rondelle d'arrêt (10) et d'autre part celui-ci est fixé au mousqueton (12) qui s'accroche au téléphone portable.

## Revendications

1. Il ságit d'un accessoire d'attache pour telephones portables et autres dipositifs de audio et video ,composé de cinq pièces unies entre elles.
La canette (figure n° 2) est assemblée à l'interieur de la carcasse(figure n° 1) à l'aide du ressort metallique (figure n° 6 ).Cet assamblage consiste à reunir l'une des extremites du ressort (7) à la saillie de la carcasse (1) et l'autre extrémité du ressort (8) à l'ouverture de la canette(4).
De même, la canette comprend un orifice (3) dans lequel est fixé le cordon (9) qui a son tour ressort par l'ouverture (2) de la carcasse.
Une foie le couvercle posé (figure n° 5), on observera que la partie posterieur de la carcasse (figure n°3) contient un boîtier (5) dans lequel s'insére la partie dentée (6) du systeme d'entraînement du cordon (figure n° 4) qui sera ensuite accroché à la ceinture ,au sac, etc...
Le telephone portable sera accroché au mousqueton (12) suivi de la chaîne (11) puis de la rondelle d' arret (10) et en fin du cordon qui ressort par l'ouverture (2) de la carcasse.
L' appareil retractile pour telephones portables admet differents modéles et matériaux de fabrication ainsi que differantes couleurs et tailles.
